# EUROPÄISCHE PATENTANMELDUNG

(11) **EP 1 026 036 A2**
(43) Veröffentlichungstag der Anmeldung: **09.08.2000**
(21) Anmeldenummer: 00102443.9
(22) Anmeldetag: 04.02.2000
(51) Int. Cl.: B60R 1/06, B60R 1/12

(54) **Rückspiegel, insbesondere Aussenspiegel für Kraftfahrzeuge**

(30) Priorität: 05.02.1999 DE 19904777
(71) Anmelder: MEKRA Lang GmbH & Co. KG, 90765 Fürth (DE)
(72) Erfinder: Lang, Heinrich, 91465 Ergersheim (DE)
(74) Vertreter: Winter, Brandl, Fürniss, Hübner, Röss, Kaiser, Polte Partnerschaft

(57) **Zusammenfassung**

Beschrieben wird ein Rückspiegel, insbesondere Außenrückspiegel für Kraftfahrzeuge, wobei zwischen einem ein Spiegelglas (10) lagerndes Spiegelgehäuse (4) und einer das Spiegelgehäuse (4) an einem Karosserieteil (8) des Fahrzeuges abstützenden Haltevorrichtung (6) eine Schwenkverbindung (12) angeordnet ist und wobei diese Schwenkverbindung (12) zumindest eine Verrastungsstellung hat. Die Verrastung zwischen Spiegelgehäuse (4) und Haltevorrichtung (6) ist hierbei bei Annäherung des Spiegelgehäuses (4) an ein Hindernis aufhebbar. Das Spiegelgehäuse (4) kann daher nahezu kraftfrei aus seiner Betriebsposition herausbewegt werden, da bei Annäherung des Spiegelgehäuses (4) an das Hindernis die Verrastung zwischen Spiegelgehäuse (4) und Haltevorrichtung (6) aufgehoben worden ist. Zur Bewegung des Spiegelgehäuses (4) in die eingeklappte Stellung muß daher die Verrastungskraft zwischen Spiegelgehäuse (4) und Haltevorrichtung (6) nicht mehr überwunden werden, so daß das Spiegelgehäuse (4) im wesentlichen widerstandsfrei und damit beschädigungsfrei in seine eingeklappte Stellung bewegt wird.

## Beschreibung

Die Erfindung betrifft einen Rückspiegel, insbesondere Außenrückspiegel für Kraftfahrzeuge, nach dem Oberbegriff des Anspruches 1.

Es ist bekannt, zwischen einem ein Spiegelglas lagerndes Spiegelgehäuse und einer das Spiegelgehäuse an einem Karosserieteil des Fahrzeuges abstützenden Haltevorrichtung eine Schwenkverbindung anzuordnen, wobei diese Schwenkverbindung zumindest eine Verrastungsstellung hat, in der sich das Spiegelgehäuse in einer Betriebsposition befindet. Wird auf das Spiegelgehäuse eine ausreichend hohe Kraft aufgebracht, so wird die Verrastungsstellung der Haltevorrichtung überwunden oder aufgehoben, so daß das Spiegelgehäuse aus seiner Betriebsposition, in welcher es im wesentlichen von der Fahrzeugkarosserie nach außen weggerichtet ist, in eine eingeklappte Stellung bewegbar ist, in der das Spiegelgehäuse annähernd parallel zu der Fahrzeugkarosserie angeordnet ist, also eine geringere seitliche Erstreckung von der Fahrzeugkarosserie weg nach außen hat.

Die Verrastung des Spiegelgehäuses gegenüber der Haltevorrichtung kann beispielsweise durch eine federbelastete Kugel erfolgen, die in einer entsprechenden Vertiefung sitzt. Im normalen Betrieb, d.h. bei einer Stellung des Spiegelgehäuses in seiner Betriebsposition muß die Verrastung ausreichend fest sein, um den in diesem normalen Betrieb auftretenden Belastungen und Kräften widerstehen zu können. Hierzu gehören beispielsweise Windkräfte, welche bei größeren Spiegelgehäusen und rascher Fahrt ganz erheblich sein können. Weiterhin muß die Verrastung zwischen Spiegelgehäuse und Haltevorrichtung vibrationsfrei sein, um eine ungehinderte Sicht über den Rückspiegel gewährleisten zu können. Diese Anforderungen bedingen eine Rastvorrichtung oder Verrastungsvorrichtung mit relativ hohen Haltekräften. Hieraus ergibt sich wiederum, daß das Spiegelgehäuse nicht ohne weiteres aus seiner Verrastungsstellung in die eingeklappte Stellung bewegt werden kann; hierzu sind relativ hohe Kräfte notwendig.

Diese relativ hohen Kräfte sind unkritisch, wenn sie langsam und gleichmäßig auf das Spiegelgehäuse aufgebracht werden, beispielsweise dann, wenn bei sehr langsamer Fahrt (Rangieren, Einparken etc.) das Spiegelgehäuse an einem feststehenden Hindernis anschlägt und dann zwar mit hoher Kraft, jedoch langsam aus seiner Verrastungsstellung bewegt wird. Beschädigungen am Spiegelgehäuse und/oder dem Spiegelglas und/oder der Verrastungsvorrichtung sind hierbei so gut wie ausgeschlossen.

Anders verhält es sich, wenn impuls- oder schlagartige Kräfte auf das Spiegelgehäuse einwirken. Hierbei müssen die Kräfte noch nicht einmal so hoch sein, daß sie das Spiegelgehäuse aus einer Verrastungsstellung bewegen, aber aufgrund der impuls- oder stoßartigen Aufbringung auch geringerer Kräfte kann das Spiegelgehäuse und insbesondere das hierin gelagerte Spiegelglas Schaden nehmen.

Demgegenüber hat es sich die vorliegende Erfindung zur Aufgabe gemacht, einen Rückspiegel nach dem Oberbegriff des Anspruches 1 so auszugestalten, daß Beschädigungen am Spiegelgehäuse und/oder Spiegelglas und/oder der Haltevorrichtung sicher vermieden werden.

Zur Lösung dieser Aufgabe schlägt die vorliegende Erfindung gemäß Anspruch 1 vor, daß die Verrastung zwischen Spiegelgehäuse und Haltevorrichtung bei Annäherung des Spiegelgehäuses an ein Hindernis aufhebbar ist.

Ungeachtet davon, wie schnell sich das Fahrzeug bewegt und wie stark daher die impuls- oder stoßartige Belastung des Spiegelgehäuses bei einer Kollision mit dem Hindernis ist, kann das Spiegelgehäuse nahezu kraftfrei aus seiner Betriebsposition herausbewegt werden, da rechtzeitig vorher, d.h. bei Annäherung des Spiegelgehäuses an das Hindernis die Verrastung zwischen Spiegelgehäuse und Haltevorrichtung aufgehoben worden ist. Zur Bewegung des Spiegelgehäuses von seiner Betriebsposition in die eingeklappte Stellung muß daher die Verrastungskraft zwischen Spiegelgehäuse und Haltevorrichtung nicht mehr überwunden werden, so daß das Spiegelgehäuse im wesentlichen widerstandsfrei in seine eingeklappte Stellung bewegt wird.

Vorteilhafte Weiterbildungen der Erfindung sind Gegenstand der Unteransprüche.

Bevorzugt ist wenigstens ein Sensor vorhanden, der die Annäherung des Spiegelgehäuses an das Hindernis erkennt. Durch die Verwendung eines Sensors kann der Gegenstand der vorliegenden Erfindung in einer Vielzahl von Ausgestaltungsformen realisiert werden, wie sich aus der nachfolgenden Beschreibung noch ergibt.

Der Sensor ist weiterhin bevorzugt in dem Spiegelgehäuse angeordnet und tastet einen fächerförmigen Bereich vor und neben dem Fahrzeug ab. Durch Anordnen des Sensors in dem Spiegelgehäuse ist ein direkter Bezug zwischen möglicherweise erfaßtem Hindernis und Spiegelgehäuse gegeben, so daß aufwendige Umrechnungsvorgänge entfallen, welche beispielsweise notwendig wären, wenn der Sensor in der vorderen Stoßstange etc. angeordnet wäre.

Es können auch mehrere Sensoren in dem Spiegelgehäuse angeordnet werden, um quasi eine "Rundumsicht" zu haben, so daß auch sich von hinten an das Spiegelgehäuse annähernde Hindernisse (z.B. beim Rückwärtsfahren) erkannt werden können.

Als Sensor kommt eine Mehrzahl von Sensortypen in Frage, beispielsweise Ultraschall-, Infrarot- oder Radarsensoren. In jedem Fall sollte der Sensor in der Lage sein, auch in der Dunkelheit, bei schlechten Sichtverhältnissen (Regen, Nebel etc.) oder unter sonstigen ungünstigen Bedingungen ein sich an das Spiegelgehäuse annäherndes Hindernis zu erkennen.

Die Empfindlichkeit und/oder Ansprechentfernung des Sensors kann gemäß einer weiteren bevorzugten Ausführungsform einstellbar sein.

Die verrastung zwischen Spiegelgehäuse und Haltevorrichtung kann ebenfalls in einer Mehrzahl von Ausführungsformen vorgesehen werden. Beispielsweise kann die Verrastung elektromagnetisch gehalten sein und wird bei Annäherung an das Hindernis durch Abschaltung der Magnetarretierung aufgehoben, so daß das Spiegelgehäuse im wesentlichen kraftfrei gegenüber dem Karosserieteil verschwenkbar ist.

Gemäß einer anderen Ausgestaltung kann die Verrastung magnetisch, d.h. mittels eines Permanentmagneten gehalten sein und wird bei Annäherung an das Hindernis durch das Anlegen eines Gegenmagnetfeldes, bevorzugt auf elektromagnetischem Wege aufgehoben.

Schließlich kann die Verrastung rein mechanisch gehalten sein und wird bei Annäherung an das Hindernis entsprechend entriegelt, was bevorzugt durch eine elektromagnetische Entriegelung erfolgt.

Um mögliche Kollisionen des Spiegelgehäuses mit dem Hindernis zu vermeiden, welche schädigend für das Spiegelgehäuse und/oder das Spiegelglas und/oder die Haltevorrichtung sein können, obwohl die Verrastung aufgehoben ist und sich somit das Spiegelgehäuse im wesentlichen kraftfrei gegenüber der Haltevorrichtung bewegen könnte, kann gemäß einer weiteren bevorzugten Ausführungsform nach Aufhebung der Verrastung das Spiegelgehäuse unter Federkraft in seine eingeklappte Stellung bewegt werden. Hierzu ist beispielsweise eine Zugfeder oder auch eine Torsionsfeder im Bereich der Schwenkachse zwischen Spiegelgehäuse und Haltevorrichtung vorhanden, welche bei ausgeklapptem Spiegel, d.h. bei einem Spiegelgehäuse in seiner Betriebsposition unter Vorspannung gesetzt wird und bei Aufhebung der Verrastung derart wirkt, daß das Spiegelgehäuse in seine eingeklappte Stellung gedreht wird.

Anstelle der Federkraft kann das Spiegelgehäuse auch unter Verwendung eines Motors in seine eingeklappte Stellung bewegt werden. Hierbei ergibt sich darüber hinaus der Vorteil, daß das Spiegelgehäuse nach dem Passieren des Hindernisses durch denselben Motor, der dann mit entgegengesetzter Drehrichtung läuft, in seine Betriebsposition, d.h. ausgeklappte Stellung zurückbewegt werden kann.

Die Aufhebung der Verrastung zwischen Spiegelgehäuse und Haltevorrichtung kann weiterhin abschaltbar gemacht werden. Dies ist dann vorteilhaft, wenn das Fahrzeug eng an Hindernisse, beispielsweise Gebäudemauern oder dergleichen heranmanövriert werden muß, wobei dann die dichte Annäherung an derartige Hindernisse normalerweise den oder die Sensoren ansprechen lassen würde, so daß der oder die Spiegel aus der ausgeklappten Stellung in die eingeklappte Stellung bewegt werden, falls die Federbelastung oder der motorische Antrieb zwischen Spiegelgehäuse und Haltevorrichtung verwendet werden. Da gerade bei engen Rangiermanövern insbesondere im Rückwärtsgang der Fahrer eines Fahrzeuges zum Großteil auf die Außenrückspiegel angewiesen ist, wäre ein automatisches Einklappen des oder der Spiegel in einer derartigen Situation äußerst unangenehm. Von daher kann der Fahrer bevorzugt diese Einklapp-Automatik abschalten, wenn er bewußt nahe an Hindernisse heran oder an diesen vorbeifahren muß.

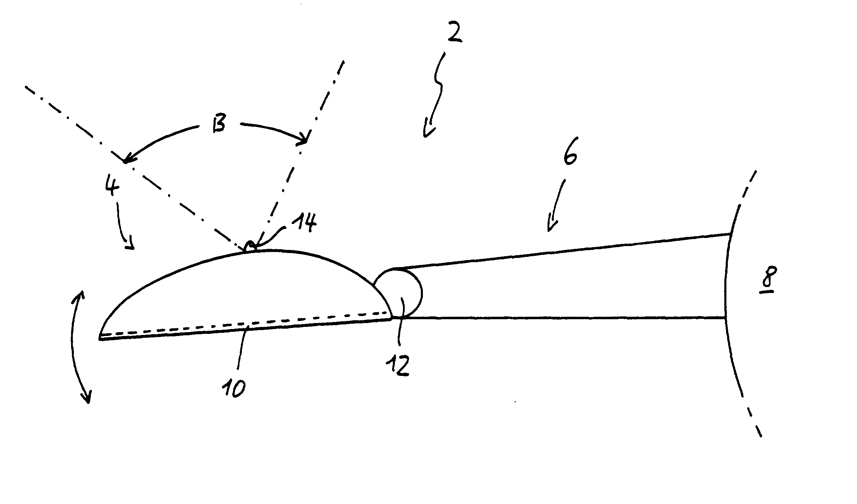

Weitere Einzelheiten, Aspekte und Vorteile der vorliegenden Erfindung ergeben sich aus der nachfolgenden Beschreibung einer Ausführungsform anhand der Zeichnung.

Die einzige Figur der Zeichnung zeigt schematisch stark vereinfacht eine Draufsicht von oben auf einen erfindungsgemäßen Rückspiegel.

Ein in der Zeichnung insgesamt mit 2 bezeichneter Rückspiegel umfaßt im wesentlichen ein Spiegelgehäuse 4 und eine Haltevorrichtung 6, mit der das Spiegelgehäuse 4 an einem Karosserieteil 8 eines Kraftfahrzeuges abgestützt ist. In dem Spiegelgehäuse ist in bekannter Weise ein Spiegelglas 10 angeordnet.

Zwischen der Haltevorrichtung 6 und dem Spiegelgehäuse 4 befindet sich eine Schwenkverbindung 12, welche eine Schwenkbewegung des Spiegelgehäuses 4 relativ zu der Haltevorrichtung 6 um jeweils etwa 90° in und entgegen Uhrzeigerrichtung ermöglicht, wie in der Zeichnung durch den Doppelpfeil veranschaulicht.

Die Schwenkverbindung 12 weist eine Verrastung oder einen Rastmechanismus auf, der im normalen Betrieb auf das Spiegelgehäuse 4 einwirkende Kräfte, d.h. insbesondere Kräfte durch den Fahrtwind aufnehmen kann, ohne eine Verschwenkung des Spiegelgehäuses 4 zu erlauben. Weiterhin ist der Verrastungsmechanismus in der Schwenkverbindung 12 zumindest vibrationsarm, bevorzugt jedoch weitestgehend vibrationsfrei, d.h., von dem Karosserieteil 8 über die Haltevorrichtung 6 auf die Schwenkverbindung 12 einwirkende Vibrationsbewegungen werden von dem Verrastungsmechnismus in der Schwenkverbindung 12 nicht an das Spiegelgehäuse 4 weitergegeben bzw. der Verrastungsmechanismus selbst vibriert nicht.

Die Verrastung in der Schwenkverbindung 12 ist beim Gegenstand der vorliegenden Erfindung immer dann aufhebbar, wenn sich das Spiegelgehäuse 4 einem Hindernis annähert. Hierzu ist wenigstens ein Sensor 14 vorgesehen, der bevorzugt in dem Spiegelgehäuse 4 angeordnet ist und in Fahrtrichtung nach vorne/seitlich blickt, wobei der Blick- oder Sichtbereich B fächerförmig ist, wie in der Zeichnung veranschaulicht. Der Sensor 14 kann beispielsweise auf Ultraschall-, Infrarot- oder Radarbasis arbeiten. Es können auch mehrere Sensoren in dem Spiegelgehäuse angeordnet werden, um die gesamte Umgebung des Spiegelgehäuses abtasten zu können, so daß auch sich von hinten an das Spiegelgehäuse annähernde Hindernisse (z.B. beim Rückwärtsfahren) erkannt werden können.

Erkennt der Sensor 14, daß sich das Spiegelgehäuse 4 an ein Hindernis annähert, wird der Verrastungsmechanismus in der Schwenkverbindung 12 aufgehoben oder gelöst. Ist beispielsweise der Verrastungsmechanismus auf elektromagnetischer Basis, wird bei Annäherung des Spiegelgehäuses 4 an ein Hindernis durch Abschalten der Magneterregung diese elektromagnetische Verrastung aufgehoben. In einer anderen Ausführungsform kann die Verrastung magnetisch, d.h. permanentmagnetisch gehalten sein. Bei Annäherung des Spiegelgehäuses 4 an ein Hindernis wird diese permanentmagnetische Verrastung durch Anlegen eines Gegenmagnetfeldes, bevorzugt auf elektromagnetischem Wege, aufgehoben. Ist die Verrastung rein mechanisch gehalten, wird diese Verrastung bei Annäherung des Spiegelgehäuses 4 an ein Hindernis bevorzugt auf elektromagnetischer Basis entriegelt.

In jedem Falle wird die Verrastung in der Schwenkverbindung 12 bei Annähern des Spiegelgehäuses 4 an ein Hindernis aufgehoben oder entriegelt, so daß das Spiegelgehäuse 4 beim Auftreffen auf das Hindernis im wesentlichen kraftfrei um die Schwenkverbindung 12 aus einer in der Zeichnung dargestellten ausgeklappten oder Betriebsposition in eine eingeklappte Stellung bewegt werden kann, in der das Spiegelgehäuse 4 um 90° in oder gegen Uhrzeigerrichtung um die Schwenkverbindung 12 gedreht ist.

Bevorzugt wird bei Annähern des Spiegelgehäuses 4 an ein Hindernis nicht nur die Verrastung in der Schwenkverbindung 12 aufgehoben, sondern das Spiegelgehäuse 4 wird selbstätig in eine eingeklappte Stellung bewegt. Hierzu kann zwischen dem Spiegelgehäuse 4 und der Haltevorrichtung 6 eine Feder angeordnet sein, welche in der ausgeklappten Stellung des Spiegelgehäuses 4 gemäß der Zeichnung gespannt ist und bei freigegebener Verrastung in der Schwenkverbindung 12 das Spiegelgehäuse 4 um annähernd 90° relativ zu der Haltevorrichtung 6 verschwenkt. Diese Feder oder Federvorrichtung kann eine Zugfeder zwischen Spiegelgehäuse 4 und Haltevorrichtung 6, eine Torsionsfeder im Bereich der Schwenkverbindung 12 etc. sein.

Gemäß einer weiteren bevorzugten Ausführungsform kann im Bereich der Schwenkverbindung 12 ein Motor angeordnet sein, der bei Erkennen der Annäherung des Spiegelgehäuses 4 an ein Hindernis das Spiegelgehäuse 4 relativ zu der Haltevorrichtung 6 verschwenkt. Hierbei kann der Motor selbst die Verrastung in der Schwenkverbindung 12 bilden, d.h., der Motor und ein eventuell nachgeschaltetes Getriebe halten im Ruhezustand des Motors das Spiegelgehäuse 4 relativ zu der Haltevorrichtung 6 in der Betriebsposition. Bei Annäherung an ein Hindernis wird der Motor angetrieben und bewegt dann das Spiegelgehäuse 4 relativ zu der Haltevorrichtung 6.

Wird in der Schwenkverbindung 12 ein Motor verwendet, kann gemäß einer weiteren bevorzugten Ausgestaltungsform nach Passieren des Hindernisses das Spiegelgehäuse 4 wieder in seine Ausgangs- oder Betriebsposition zurückgefahren werden.

Die Bewegung des Spiegelgehäuses 4 mittels eines Motors in der Schwenkverbindung 12 ist weiterhin bevorzugt abschaltbar, so daß bei einem Manövrieren des Fahrzeuges auf engem Raum, wo sich das Spiegelgehäuse 4 an feststehende Hindernisse annähert, beispielsweise Gebäudewände oder dergleichen, dann verhindert werden kann, daß das Spiegelgehäuse 4 ungewollt motorisch eingeklappt wird.

Weiterhin bevorzugt ist die Empfindlichkeit des Sensors 14, d.h. das Ansprechverhalten einstellbar.

Der Gegenstand der vorliegenden Erfindung macht es möglich, das Spiegelgehäuse 4 und hier insbesondere das Spiegelglas 10 vor starken impuls- oder stoßartigen Belastungen zu schützen, welche immer dann auftreten, wenn das Spiegelgehäuse 4 mit hoher Geschwindigkeit ein feststehendes Hindernis kontaktiert und der Verrastungsmechanismus in der Schwenkverbindung 12, der das Spiegelgehäuse 4 normalerweise gegenüber der Haltevorrichtung 6 hält, überwunden werden muß. Bei der Ausgestaltungsform mit der federunterstützten Bewegung des Spiegelgehäuses 4 relativ zu der Haltevorrichtung 6 oder der motorischen Bewegung des Spiegelgehäuses 4 gegenüber der Haltevorrichtung 6 wirken auf das Spiegelgehäuse 4 überhaupt keine Stöße oder Schläge ein, da es rechtzeitig vor Passieren des Hindernisses von seiner Betriebsposition aus in die eingeklappte Stellung bewegt wird.

Beschrieben wurde ein Rückspiegel, insbesondere Außenrückspiegel für Kraftfahrzeuge, wobei zwischen einem ein Spiegelglas lagerndes Spiegelgehäuse und einer das Spiegelgehäuse an einem Karosserieteil des Fahrzeuges abstützenden Haltevorrichtung eine Schwenkverbindung angeordnet ist und wobei diese Schwenkverbindung zumindest eine Verrastungsstellung hat. Die Verrastung zwischen Spiegelgehäuse und Haltevorrichtung ist hierbei bei Annäherung des Spiegelgehäuses an ein Hindernis aufhebbar. Das Spiegelgehäuse kann daher nahezu kraftfrei passiv, d.h. durch das Hindernis oder aktiv, d.h. mit Federunterstützung oder motorisch aus seiner Betriebsposition herausbewegt werden, da bei Annäherung des Spiegelgehäuses an das Hindernis die Verrastung zwischen Spiegelgehäuse und Haltevorrichtung aufgehoben worden ist. Zur Bewegung des Spiegelgehäuses in die eingeklappte Stellung muß daher die Verrastungskraft zwischen Spiegelgehäuse und Haltevorrichtung nicht mehr überwunden werden, so daß das Spiegelgehäuse im wesentlichen widerstandsfrei und damit beschädigungsfrei in seine eingeklappte Stellung bewegt wird.

## Patentansprüche

1. Rückspiegel, insbesondere Außenrückspiegel für Kraftfahrzeuge, mit einem ein Spiegelglas lagerndes Spiegelgehäuse und einer das Spiegelgehäuse an einem Karosserieteil des Kraftfahrzeuges abstützenden Haltevorrichtung, wobei zwischen Spiegelgehäuse und Haltevorrichtung eine Schwenkverbindung mit wenigstens einer Verrastungsstellung angeordnet ist, in der sich das Spiegelgehäuse in einer Betriebsposition befindet,
dadurch gekennzeichnet,
daß die Verrastung zwischen Spiegelgehäuse und Haltevorrichtung bei Annäherung des Spiegelgehäuses an ein Hindernis aufhebbar ist.

2. Rückspiegel nach Anspruch 1, dadurch gekennzeichnet, daß wenigstens ein Sensor vorhanden ist, der die Annäherung des Spiegelgehäuses an das Hindernis erkennt.

3. Rückspiegel nach Anspruch 2, dadurch gekennzeichnet, daß der Sensor in dem Spiegelgehäuse angeordnet ist und einen fächerförmigen Bereich vor und neben dem Fahrzeug abtastet.

4. Rückspiegel nach Anspruch 2 oder 3, dadurch gekennzeichnet, daß der Sensor ein Ultraschallsensor ist.

5. Rückspiegel nach Anspruch 2 oder 3, dadurch gekennzeichnet, daß der Sensor ein Infrarotsensor ist.

6. Rückspiegel nach Anspruch 2 oder 3, dadurch gekennzeichnet, daß der Sensor ein Radarsensor ist.

7. Rückspiegel nach einem der Ansprüche 1 bis 6, dadurch gekennzeichnet, daß die Empfindlichkeit und/oder die Ansprechentfernung des Sensors einstellbar ist.

8. Rückspiegel nach einem der Ansprüche 1 bis 7, dadurch gekennzeichnet, daß die Verrastung elektromagnetisch gehalten ist und bei Annäherung an das Hindernis durch Abschalten der Magneterregung aufhebbar ist.

9. Rückspiegel nach einem der Ansprüche 1 bis 7, dadurch gekennzeichnet, daß die Verrastung magnetisch gehalten ist und bei Annäherung an das Hindernis durch Anlegen eines Gegenmagnetfeldes aufhebbar ist.

10. Rückspiegel nach einem der Ansprüche 1 bis 7, dadurch gekennzeichnet, daß die Verrastung mechanisch gehalten ist und bei Annäherung an das Hindernis durch Entriegelung, insbesondere elektromagnetische Entriegelung aufhebbar ist.

11. Rückspiegel nach einem der Ansprüche 1 bis 10, dadurch gekennzeichnet, daß nach Aufhebung der Verrastung das Spiegelgehäuse unter Federkraft in eine eingeklappte Stellung bewegt wird.

12. Rückspiegel nach einem der Ansprüche 1 bis 10, dadurch gekennzeichnet, daß nach Aufhebung der Verrastung das Spiegelgehäuse motorisch in eine eingeklappte Stellung bewegt wird.

13. Rückspiegel nach Anspruch 12, dadurch gekennzeichnet, daß nach Passieren des Hindernisses das Spiegelgehäuse motorisch in seine Betriebsposition zurückbewegt wird.

14. Rückspiegel nach einem der Ansprüche 1 bis 13, dadurch gekennzeichnet, daß die Aufhebung der Verrastung abschaltbar ist.
